# EUROPEAN PATENT APPLICATION

(11) **EP 4 760 750 A1**
(43) Date of publication of application: **17.06.2026**
(21) Application number: 24879792.0
(22) Date of filing: 17.10.2024
(51) Int. Cl.: H01B 1/10, C01B 25/14, H01B 13/00, H01M 4/13, H01M 4/62, H01M 10/052, H01M 10/0562, H01B 1/06

(54) **SULFIDE SOLID ELECTROLYTE, METHOD FOR PRODUCING SULFIDE SOLID ELECTROLYTE, POSITIVE ELECTRODE FOR POWER STORAGE ELEMENT, AND POWER STORAGE ELEMENT**

(30) Priority: 17.10.2023 JP 2023179174
(71) Applicant: GS Yuasa International Ltd., Kisshoin, Minami-ku, Kyoto-shi, Kyoto 601-8520 (JP)
(72) Inventor: FUKUSHIMA, Akihiro, Kyoto-shi, Kyoto 601-8520 (JP); UMEDA, Tomohito, Kyoto-shi, Kyoto 601-8520 (JP); SUYAMA, Motoshi, Kyoto-shi, Kyoto 601-8520 (JP); INAOKA, Takeaki, Kyoto-shi, Kyoto 601-8520 (JP); YOSHIKAWA, Daisuke, Kyoto-shi, Kyoto 601-8520 (JP)
(74) Representative: Isarpatent
(86) International application number: PCT/JP2024/037062
(87) International publication number: WO 2025/084371

(57) **Abstract**

According to one aspect of the present invention having a crystal structure, includes: at least one element A selected from the group consisting of a lithium element, a sodium element, and a potassium element; a phosphorus element; at least one element M selected from the group consisting of an aluminum element and a boron element; a nitrogen element; and at least one halogen element, in which a molar ratio of a content of the element A to a content of the phosphorus element (A/P) is less than 3.74, and a molar ratio of a content of the nitrogen element to a content of the phosphorus element (N/P) is less than 0.33.

## Description

### TECHNICAL FIELD

The present invention relates to a sulfide solid electrolyte, a method for producing a sulfide solid electrolyte, a positive electrode for an energy storage device, and an energy storage device.

### BACKGROUND ART

Lithium ion secondary batteries are often used in electronic devices such as personal computers and communication terminals, automobiles, and the like, because of their high energy density. The lithium ion secondary battery generally includes a pair of electrodes electrically isolated by a separator and a non-aqueous electrolyte interposed between the electrodes, and is configured to be charged and discharged through the transfer of lithium ions between the two electrodes. In addition, capacitors such as lithium ion capacitors have also been widely adopted as energy storage devices other than the lithium ion secondary batteries.

In recent years, an energy storage device using, as a non-aqueous electrolyte, a solid electrolyte such as a sulfide solid electrolyte instead of a non-aqueous electrolytic solution in which an electrolyte salt is dissolved in a liquid such as an organic solvent has been proposed.

Patent Literature 1 describes a sulfide solid electrolyte having a crystal structure and containing, as constituent elements, one, or two or more divalent elements A, one, or two or more halogen elements X, and a nitrogen element, in which the divalent element A and the halogen element X make a combination such that a compound A_{0.5}X composed of these elements has a hydration energy larger than that of LiI.

### CITATION LIST

### Patent Literature

Patent Literature 1: WO 2020/045634

### DISCLOSURE OF INVENTION

### PROBLEMS TO BE SOLVED BY THE INVENTION

Patent Literature 1 states that, when a sulfide solid electrolyte contains a nitrogen element, a hydration reaction having low reversibility can be suppressed. However, the present inventors have found that, when a sulfide solid electrolyte contains a nitrogen element, the oxidation resistance may be lowered.

The present invention has been made in view of the above circumstances, and an object of the present invention is to provide a sulfide solid electrolyte having high oxidation resistance, a method for producing such a sulfide solid electrolyte, and a positive electrode for an energy storage device and an energy storage device using such a sulfide solid electrolyte.

### MEANS FOR SOLVING THE PROBLEMS

A sulfide solid electrolyte according to one aspect of the present invention having a crystal structure, includes: at least one element A selected from the group consisting of a lithium element, a sodium element, and a potassium element; a phosphorus element; at least one element M selected from the group consisting of an aluminum element and a boron element; a nitrogen element; and at least one halogen element, in which a molar ratio of a content of the element A to a content of the phosphorus element (A/P) is less than 3.74, and a molar ratio of a content of the nitrogen element to a content of the phosphorus element (N/P) is less than 0.33.

A method for producing a sulfide solid electrolyte according to another aspect of the present invention includes: treating a composition containing at least one element A selected from the group consisting of a lithium element, a sodium element, and a potassium element; a phosphorus element; at least one element M selected from the group consisting of an aluminum element and a boron element; a nitrogen element; and at least one halogen element, in which a molar ratio of a content of the element A to a content of the phosphorus element (A/P) is less than 3.74, and a molar ratio of a content of the nitrogen element to a content of the phosphorus element (N/P) is less than 0.33.

A sulfide solid electrolyte according to another aspect of the present invention is produced by the method for producing a sulfide solid electrolyte according to the another aspect of the present invention.

A positive electrode for an energy storage device according to another aspect of the present invention includes the sulfide solid electrolyte according to the one aspect of the present invention.

An energy storage device according to another aspect of the present invention includes the sulfide solid electrolyte according to the one aspect of the present invention.

### EFFECT OF THE INVENTION

According to any one of the aspects of the present invention, a sulfide solid electrolyte having high oxidation resistance, a method for producing such a sulfide solid electrolyte, and a positive electrode for an energy storage device and an energy storage device using such a sulfide solid electrolyte can be provided.

### BRIEF DESCRIPTION OF DRAWINGS

[FIG. 1] FIG. 1 is a schematic cross-sectional view of an all-solid-state battery which is one embodiment of an energy storage device of the present invention.
[FIG. 2] FIG. 2 is a schematic view illustrating an energy storage apparatus constituted by assembling a plurality of energy storage devices according to one embodiment of the present invention.

### DESCRIPTION OF EMBODIMENTS

First, outlines of a sulfide solid electrolyte, a method for producing a sulfide solid electrolyte, and a positive electrode for an energy storage device and an energy storage device using such a sulfide solid electrolyte disclosed by the present description will be described.

[1] A sulfide solid electrolyte according to one aspect of the present invention having a crystal structure, includes: at least one element A selected from the group consisting of a lithium element, a sodium element, and a potassium element; a phosphorus element; at least one element M selected from the group consisting of an aluminum element and a boron element; a nitrogen element; and at least one halogen element, in which a molar ratio of a content of the element A to a content of the phosphorus element (A/P) is less than 3.74, and a molar ratio of a content of the nitrogen element to a content of the phosphorus element (N/P) is less than 0.33.

The sulfide solid electrolyte according to the above [1] has high oxidation resistance. That is, even when the sulfide solid electrolyte according to the above [1] is used for, for example, a positive electrode or the like, the coulombic efficiency of an energy storage device using the positive electrode or the like is less likely to decrease. Although the reason why such an effect is produced is not certain, the following reason is presumed. The sulfide solid electrolyte according to the above [1] contains a nitrogen element and at least one element M selected from the group consisting of an aluminum element and the like. Thus, it is considered that a structure having high oxidation resistance is formed by the presence of the nitrogen element and the element M in the sulfide solid electrolyte according to the above [1]. As such a structure, for example, a coating film (protective layer) containing the nitrogen element and the element M and having high oxidation resistance at a crystal grain boundary or the like is considered. In addition, it is considered that such a structure is difficult to be maintained when the content of at least one element A selected from the group consisting of a lithium element, a sodium element, and a potassium element or the nitrogen element is excessive. That is, it is presumed that, when the sulfide solid electrolyte contains the nitrogen element and the element M, and the molar ratio of the content of the element A to the content of the phosphorus element (A/P) and the molar ratio of the content of the nitrogen element to the content of the phosphorus element (N/P) are within the above ranges, the oxidation resistance of the sulfide solid electrolyte is enhanced.

Having a crystal structure can be confirmed by powder X-ray diffraction measurement. More specifically, in the present invention, the term "having a crystal structure" means that a peak derived from the crystal structure of the solid electrolyte is observed in an X-ray diffraction diagram in powder X-ray diffraction measurement. The sulfide solid electrolyte according to the above [1] may contain an amorphous part. The powder X-ray diffraction measurement is performed by the following procedure. An airtight sample holder for X-ray diffraction measurement is filled with sulfide solid electrolyte powder to be measured under an argon atmosphere having a dew point of -50°C or less. Powder X-ray diffraction measurement is performed using an X-ray diffractometer ("MiniFlex II" manufactured by Rigaku Corporation). The source is a CuKα ray, the tube voltage is 30 kV, the tube current is 15 mA, and diffracted X-rays are passed through a 30 µm-thick Kβ filter and detected by a high-speed one dimensional detector (model number: D/teX Ultra 2). The sampling width is 0.01°, the scanning speed is 5°/min, the divergence slit width is 0.625°, the receiving slit width is 13 mm (OPEN), and the scattering slit width is 8 mm.

[2] In the sulfide solid electrolyte according to the above [1], the element M may include an aluminum element.

[3] In the sulfide solid electrolyte according to the above [1] or [2], the halogen element may include a bromine element or an iodine element.

[4] The sulfide solid electrolyte according to any one of the above [1] to [3] may be represented by the following formula (1),

AₐPM_{b}S_{c}N_{d}XₑY_{f} (1)

in the formula (1), A is at least one selected from the group consisting of Li, Na, and K, M is at least one selected from the group consisting of Al and B, X is at least one selected from the group consisting of F, Cl, Br, and I, Y is at least one element other than A, P, S, M, N, and X, and a, b, c, d, e, and f satisfy 2 ≤ a < 3.74, 0.01 ≤ b ≤ 1, 2 ≤ c ≤ 6, 0.01 ≤ d < 0.33, 0.01 ≤ e ≤ 1, and 0 ≤ f ≤ 1, respectively.

Each of the sulfide solid electrolytes according to the above [2] to [4] is a preferred embodiment of the present invention, has higher oxidation resistance, and is useful as a sulfide solid electrolyte.

[5] A method for producing a sulfide solid electrolyte according to another aspect of the present invention, includes: treating a composition containing at least one element A selected from the group consisting of a lithium element, a sodium element, and a potassium element; a phosphorus element; at least one element M selected from the group consisting of an aluminum element and a boron element; a nitrogen element; and at least one halogen element, in which a molar ratio of a content of the element A to a content of the phosphorus element (A/P) is less than 3.74, and a molar ratio of a content of the nitrogen element to a content of the phosphorus element (N/P) is less than 0.33.

According to the method for producing a sulfide solid electrolyte according to the above [5], a sulfide solid electrolyte having high oxidation resistance can be produced.

The term "composition" means a mixture obtained by mixing two or more kinds of compounds or simple substances (hereinafter, a compound and a simple substance are also collectively referred to as a compound or the like). The element A, the phosphorus element, the element M, the nitrogen element, and the halogen element may be contained in the entire composition, that is, any compound or the like contained in the composition. In addition, the composition may contain a compound or the like which does not contain any of the element A, the phosphorus element, the element M, the nitrogen element, and the halogen element.

[6] In the method for producing a sulfide solid electrolyte according to the above [5], the composition may contain a compound represented by A_{α}M_{β}N (A is the element A, M is the element M, and α and β are numerical values giving a stoichiometric ratio depending on a kind of the element M).

In the method for producing a sulfide solid electrolyte according to the above [6], since the composition contains the compound represented by A_{α}M_{β}N, it is possible to suppress the discharge of the nitrogen element from the composition in the process of producing the sulfide solid electrolyte. Thus, the content of the nitrogen element in the composition can be controlled with high accuracy. That is, since the composition contains the compound, it is possible to easily control the content of the nitrogen element to the content of the phosphorus element to be within the above range, and thus a sulfide solid electrolyte having high oxidation resistance can be reliably and easily produced.

[7] A sulfide solid electrolyte according to another aspect of the present invention may be produced by the method for producing a sulfide solid electrolyte according to the above [5] or [6].

The sulfide solid electrolyte according to the above [7] has high oxidation resistance.

[8] A positive electrode for an energy storage device according to another aspect of the present invention includes the sulfide solid electrolyte according to any one of the above [1] to [4] and [7].

Since the positive electrode for an energy storage device according to the above [8] includes a sulfide solid electrolyte having high oxidation resistance, it is possible to enhance the performance of an energy storage device using the positive electrode for an energy storage device according to the above [8].

[9] An energy storage device according to another aspect of the present invention includes the sulfide solid electrolyte according to any one of the above [1] to [4] and [7].

In the energy storage device according to the above [9], since a sulfide solid electrolyte having high oxidation resistance is used, it is possible to exhibit favorable energy storage device performance.

Hereinafter, a sulfide solid electrolyte, a method for producing a sulfide solid electrolyte, a positive electrode for an energy storage device, an energy storage device, a method for producing an energy storage device, an energy storage apparatus according to one embodiment of the present invention and other embodiments will be described in detail. The names of constituent members (constituent elements) used in the embodiments may be different from the names of constituent members (constituent elements) used in the background art. In addition, the names of elements may be represented by element symbols.

### <Sulfide solid electrolyte>

A sulfide solid electrolyte according to one embodiment of the present invention has a crystal structure. In addition, the sulfide solid electrolyte has a predetermined elemental composition to be described below. The sulfide solid electrolyte has high oxidation resistance. The sulfide solid electrolyte usually has lithium ion conductivity, sodium ion conductivity, or potassium ion conductivity. The sulfide solid electrolyte preferably has lithium ion conductivity. The sulfide solid electrolyte can also exhibit high ion conductivity.

### (Crystal structure)

The sulfide solid electrolyte preferably contains a phase having high ion conductivity (HICP: High Ion Conduction Phase) as a crystal structure. HICP is a specific crystal structure in which a diffraction angle 2θ has diffraction peaks in a range of 19.9° ± 0.5° and a range of 29.3° ± 0.5° in an X-ray diffraction diagram using a CuKα ray. When the sulfide solid electrolyte has diffraction peaks derived from HICP, favorable ion conductivity can be exhibited.

The sulfide solid electrolyte according to one embodiment of the present invention may have a crystal structure other than HICP. Examples of other crystal structures include LGPS type, argyrodite type, Li₇P₃S₁₁, and Thio-LISICON type. The sulfide solid electrolyte may have an amorphous part.

### (Composition)

The sulfide solid electrolyte contains: at least one element A selected from the group consisting of a lithium element, a sodium element, and a potassium element; a phosphorus element; at least one element M selected from the group consisting of an aluminum element and a boron element; a nitrogen element; and at least one halogen element X. In addition, the sulfide solid electrolyte contains a sulfur element as a constituent element. Hereinafter, each constituent element and the like will be described.

The element A is at least one selected from the group consisting of a lithium element, a sodium element, and a potassium element. The element A preferably includes a lithium element, and more preferably is a lithium element.

The upper limit of the molar ratio of the content of the element A to the content of the phosphorus element (A/P) is less than 3.74, preferably 3.72, more preferably 3.70, and still more preferably 3.68. The lower limit of the molar ratio (A/P) is preferably 3.00, more preferably 3.20, still more preferably 3.40, and yet still more preferably 3.60. The molar ratio (A/P) may be in a range in which any of the lower limits described above and any of the upper limits described above are combined. When the molar ratio (A/P) is set to be within the above range, the oxidation resistance can be enhanced.

The element M is at least one selected from the group consisting of an aluminum element and a boron element. It is considered that the sulfide solid electrolyte forms a structure having high oxidation resistance by containing the element M together with the nitrogen element. The element M preferably includes an aluminum element, and more preferably is an aluminum element.

The lower limit of the molar ratio of the content of the element M to the content of the phosphorus element (M/P) is preferably 0.01, more preferably 0.02, and still more preferably 0.03. The upper limit of the molar ratio (M/P) is preferably 0.15, more preferably 0.10, and still more preferably 0.05. When the molar ratio (M/P) is set to be equal to or less than the upper limit, the ion conductivity of the sulfide solid electrolyte can be increased. The molar ratio (M/P) may be in a range in which any of the lower limits described above and any of the upper limits described above are combined.

The upper limit of the molar ratio of the content of the nitrogen element to the content of the phosphorus element (N/P) is less than 0.33, preferably 0.30, more preferably 0.25, still more preferably 0.20, yet still more preferably 0.15, and particularly preferably 0.10. The lower limit of the molar ratio (N/P) is preferably 0.01, more preferably 0.02, still more preferably 0.04, and yet still more preferably 0.06. The molar ratio (N/P) may be in a range in which any of the lower limits described above and any of the upper limits described above are combined. When the molar ratio (N/P) is set to be within the above range, the oxidation resistance can be enhanced. In addition, since a portion of the sulfide solid electrolyte, which is in contact with moisture, becomes basic, generation of hydrogen sulfide is easily suppressed.

Examples of the halogen element X include a fluorine element, a chlorine element, a bromine element, and an iodine element. The halogen element X preferably includes a bromine element or an iodine element, more preferably includes both a bromine element and an iodine element, and still more preferably is a bromine element and an iodine element.

The lower limit of the molar ratio of the content of the halogen element X to the content of the phosphorus element (X/P) is preferably 5.20, more preferably 0.56, still more preferably 0.60, and yet still more preferably 0.64. The upper limit of the molar ratio (X/P) is preferably 0.82, more preferably 0.78, still more preferably 0.74, and yet still more preferably 0.70. The molar ratio (X/P) may be in a range in which any of the lower limits described above and any of the upper limits described above are combined.

The molar ratio of the total content of the bromine element and the iodine element to the total content of the halogen element X ((Br + I)/X) is preferably 0.5 or more, more preferably 0.7 or more, and still more preferably 0.9 or more. The molar ratio ((Br + I)/X) may be substantially 1.0.

The lower limit of the molar ratio of the content of the bromine element to the content of the phosphorus element (Br/P) is preferably 0.32, more preferably 0.34, still more preferably 0.36, and yet still more preferably 0.38. The upper limit of the molar ratio (Br/P) is preferably 0.48, more preferably 0.46, still more preferably 0.44, and yet still more preferably 0.42. The molar ratio (Br/P) may be in a range in which any of the lower limits described above and any of the upper limits described above are combined.

The lower limit of the molar ratio of the content of the iodine element to the content of the phosphorus element (I/P) is preferably 0.20, more preferably 0.22, still more preferably 0.24, and yet still more preferably 0.26. The upper limit of the molar ratio (I/P) is preferably 0.34, more preferably 0.32, still more preferably 0.30, and yet still more preferably 0.28. The molar ratio (I/P) may be in a range in which any of the lower limits described above and any of the upper limits described above are combined.

The lower limit of the molar ratio of the content of the sulfur element to the content of the phosphorus element (S/P) is preferably 3.20, more preferably 3.40, still more preferably 3.60, and yet still more preferably 3.80. The upper limit of the molar ratio (S/P) is preferably 4.80, more preferably 4.60, still more preferably 4.40, and yet still more preferably 4.20. The molar ratio (S/P) may be in a range in which any of the lower limits described above and any of the upper limits described above are combined.

The sulfide solid electrolyte according to one embodiment of the present invention may further contain an element Y other than the element A, the phosphorus element, the element M, the nitrogen element, the halogen element X, and the sulfur element. Examples of the other element Y include an oxygen element. However, the molar ratio of the content of the other element Y to the content of the phosphorus element (Y/P) in the sulfide solid electrolyte is, for example, preferably 0 or more and 1 or less in some cases, and more preferably 0.1 or less and further 0.01 or less in some cases.

The composition of the sulfide solid electrolyte according to one embodiment of the present invention is preferably any of a combination of a lithium element as the element A, a phosphorus element, the element M, a nitrogen element, a bromine element as the halogen element X, and a sulfur element, a combination of a lithium element as the element A, a phosphorus element, the element M, a nitrogen element, an iodine element as the halogen element X, and a sulfur element, and a combination of a lithium element as the element A, a phosphorus element, the element M, a nitrogen element, a bromine element and an iodine element as the halogen element X, and a sulfur element. Among the above, the combination of a lithium element as the element A, a phosphorus element, the element M, a nitrogen element, a bromine element and an iodine element as the halogen element X, and a sulfur element is more preferable. The sulfide solid electrolyte may contain the other element Y as an optional element in addition to the above combination of elements. In the sulfide solid electrolyte having the above combination of elements, the preferred content of each element is the same as described above.

The sulfide solid electrolyte according to one embodiment of the present invention is preferably represented by the following formula (1),

AₐPM_{b}S_{c}N_{d}XₑY_{f} (1)

in the formula (1), A is at least one selected from the group consisting of Li, Na, and K, M is at least one selected from the group consisting of Al and B, X is at least one selected from the group consisting of F, Cl, Br, and I, Y is at least one element other than A, P, S, M, N, and X, and a, b, c, d, e, and f satisfy 2 ≤ a < 3.74, 0.01 ≤ b ≤ 1, 2 ≤ c ≤ 6, 0.01 ≤ d < 0.33, 0.01 ≤ e ≤ 1, and 0 ≤ f ≤ 1, respectively.

When the sulfide solid electrolyte according to one embodiment of the present invention has the composition represented by the above formula (1), the oxidation resistance is further enhanced. In the above formula (1), A preferably includes Li, and more preferably is Li. M preferably includes Al, and more preferably is Al. X preferably includes Br and I, and more preferably is Br and I. A preferred range of each of a, b, c, d, e, and f is the same as the above-described preferred range of the molar ratio of the content of each element to the content of the phosphorus element. That is, the preferred range of a is the same as the above-described preferred range of the molar ratio (A/P), the preferred range of b is the same as the above-described preferred range of the molar ratio (M/P), the preferred range of c is the same as the above-described preferred range of the molar ratio (S/P), the preferred range of d is the same as the above-described preferred range of the molar ratio (N/P), the preferred range of e is the same as the above-described preferred range of the molar ratio (X/P), and the preferred range of f is the same as the above-described preferred range of the molar ratio (Y/P).

### (Physical properties, applications, and the like)

The lower limit of the ion conductivity at 25°C of the sulfide solid electrolyte according to one embodiment of the present invention is preferably 1 mS/cm, more preferably 2 mS/cm, still more preferably 3 mS/cm, yet still more preferably 4 mS/cm, and particularly preferably 5 mS/cm or 6 mS/cm. When the ion conductivity at 25°C of the sulfide solid electrolyte is equal to or more than the lower limit, the charge-discharge performance of an energy storage device including the sulfide solid electrolyte can be enhanced. The upper limit of the ion conductivity is not particularly limited, but is, for example, 20 mS/cm, and may be 10 mS/cm.

The ion conductivity of the sulfide solid electrolyte according to one embodiment of the present invention is determined by measuring an alternating-current impedance by the following method. Under an argon atmosphere having a dew point of -50°C or less, 120 mg of sample powder is put into a powder molder having an inner diameter of 10 mm, and then subjected to uniaxial pressing using a hydraulic press at 50 MPa or less. After pressure release, 120 mg of SUS316L powder as a current collector is put on an upper surface of the sample, and then subjected to uniaxial pressing using the hydraulic press again at 50 MPa or less. Next, 120 mg of SUS316L powder as a current collector is put on a lower surface of the sample, and then subjected to uniaxial pressing at 360 MPa for 5 minutes to obtain a pellet for ion conductivity measurement. The pellet for ion conductivity measurement is inserted into an HS cell manufactured by Hohsen Corp. to measure the alternating-current impedance at a predetermined temperature. The measurement conditions are an applied voltage amplitude of 20 mV, a frequency range of from 1 MHz to 100 mHz, and a measurement temperature of 25°C.

The shape of the sulfide solid electrolyte according to one embodiment of the present invention is not particularly limited, and is usually granular, massive, or the like. The sulfide solid electrolyte can be suitably used as an electrolyte of an energy storage device such as a lithium ion secondary battery, particularly a lithium ion energy storage device. Among the above, the sulfide solid electrolyte can be particularly suitably used as an electrolyte of an all-solid-state battery. The sulfide solid electrolyte can be used for any of a positive electrode, an isolation layer, a negative electrode, and the like in an energy storage device. As described above, since the sulfide solid electrolyte has high oxidation resistance, the sulfide solid electrolyte is suitably used as a sulfide solid electrolyte for a positive electrode.

### <Method for producing sulfide solid electrolyte>

A method for producing a sulfide solid electrolyte according to one embodiment of the present invention, includes: treating a composition containing at least one element A selected from the group consisting of a lithium element, a sodium element, and a potassium element; a phosphorus element; at least one element M selected from the group consisting of an aluminum element and a boron element; a nitrogen element; and at least one halogen element X. The composition usually also contains a sulfur element. According to the method for producing a sulfide solid electrolyte, a sulfide solid electrolyte having high oxidation resistance can be produced. The sulfide solid electrolyte produced by the method for producing a sulfide solid electrolyte is the same as the above-described sulfide solid electrolyte according to one embodiment of the present invention.

### (Composition)

The composition used as a raw material in the method for producing a sulfide solid electrolyte according to one embodiment of the present invention usually contains a sulfur element in addition to the element A, the phosphorus element, the element M, the nitrogen element, and the halogen element X. The composition is usually a mixture of two or more compounds or the like containing at least one element among the element A, the phosphorus element, the element M, the nitrogen element, the halogen element X, and the sulfur element. It is sufficient if any of the compounds or the like contained in the composition (mixture) contains the element A, the phosphorus element, the element M, the nitrogen element, the halogen element X, and the sulfur element. One of the compounds may contain two or more elements among the element A, the phosphorus element, the element M, the nitrogen element, the halogen element X, and the sulfur element. Examples thereof include Li₂S described below, which is a compound containing a lithium element as the element A and the sulfur element, and P₂S₅ described below, which is a compound containing the phosphorus element and the sulfur element. The composition may contain a compound or the like that does not contain any of the element A, the phosphorus element, the element M, the nitrogen element, the halogen element X, and the sulfur element.

In the composition, the molar ratio of the content of the element A to the content of the phosphorus element (A/P) is less than 3.74. In addition, the molar ratio of the content of the nitrogen element to the content of the phosphorus element (N/P) is less than 0.33. The preferred content of each element in the composition is the same as the preferred content of each element in the above-described sulfide solid electrolyte according to one embodiment of the present invention.

Examples of the compound or the like containing the phosphorus element include P₂S₃, P₂S₅, P₂O₅, P₃N₅, and simple substance phosphorus. Among the above, P₂S₃ and P₂S₅ are preferable, and P₂S₅ is more preferable. One of the compounds or the like containing the phosphorus element may be used alone, or two or more kinds thereof may be used in mixture.

Examples of the compound or the like containing the halogen element X include a compound of the element A, the sulfur element, the phosphorus element, or the like and the halogen element X, a compound of the element A and the halogen element X is preferable, and a compound of a lithium element and the halogen element X is more preferable. Examples of the compound of a lithium element and the halogen element X include LiF, LiCl, LiBr, and LiI. One of the compounds or the like containing the halogen element X may be used alone, or two or more kinds thereof may be used in mixture.

As the compound or the like containing the nitrogen element, a compound containing the nitrogen element and the element M is preferable, and a compound represented by A_{α}M_{β}N (A is the element A, M is the element M, and α and β are numerical values giving a stoichiometric ratio depending on a kind of the element M) is more preferable. The compound represented by A_{α}M_{β}N can suppress the discharge of the nitrogen element from the composition in a treatment step or the like described below. This is considered to be because, for example, as described in Patent Literature 1, when a raw material compound containing a nitrogen element and an element M is used, the defect generation energy of nitrogen is large, defects of nitrogen are less likely to be generated in the synthetic process, and a nitrogen gas is less likely to be generated. Thus, the content of the nitrogen element in the composition can be controlled with high accuracy. That is, since the composition contains the compound represented by A_{α}M_{β}N, it is possible to easily control the molar ratio of the content of the nitrogen element to the content of the phosphorus element (N/P) to be within the above range, and thus a sulfide solid electrolyte having high oxidation resistance can be reliably and easily produced.

Examples of the compound represented by A_{α}M_{β}N include a compound containing the lithium element, the nitrogen element, and the element M (hereinafter, also referred to as an Li-M-N-containing compound). The Li-M-N-containing compound can be produced by the following procedure. First, Li₃N and a nitride of the element M are prepared and mixed in a mortar or the like. Next, a pellet of the mixed raw material compound is produced. Next, the pellet is heat-treated to produce an Li-M-N-containing compound. The means for preparing the Li-M-N-containing compound is not limited thereto, and the Li-M-N-containing compound may be prepared by other methods. For example, the raw materials of the Li-M-N-containing compound may be two or more compounds containing any of the lithium element, the element M, and the nitrogen element. The Li-M-N-containing compound may be prepared by mechanical milling treatment. As the Li-M-N-containing compound, a compound which is industrially produced and sold may be prepared.

As the Li-M-N-containing compound, a lithium composite nitride of the element M is suitably used. Examples of the lithium composite nitride of the element M include lithium composite nitrides such as Li_{1.5}Al_{0.5}N and Li_{1.5}B_{0.5}N. In the lithium composite nitride, the content of the lithium element to the content of the nitrogen element is smaller than, for example, Li₃N described below. Thus, from the viewpoint of controlling the molar ratio of the content of A the element to the content of the phosphorus element (A/P) to be within the above range, the composition preferably contains the lithium composite nitride. In addition, when the composition contains the lithium composite nitride, a sulfide solid electrolyte in which generation of hydrogen sulfide is suppressed can be produced. The reason for this is that, when the composition contains the lithium composite nitride, the sulfide solid electrolyte to be obtained can reliably and easily contain a sufficient nitrogen element, and becomes basic in a portion in contact with moisture, so that hydrogen sulfide is less likely to be generated. Among the lithium composite nitrides, Li_{1.5}Al_{0.5}N is preferable.

Examples of another compound or the like containing the nitrogen element include Li₃N, PN, P₃N₅, S₄N₄, S₂N₂, and S₄N₂. One of the compounds or the like containing the nitrogen element may be used alone, or two or more kinds thereof may be used in mixture.

As the compound or the like containing the element M, a compound containing the nitrogen element and the element M is preferable, and the above-described compound represented by A_{α}M_{β}N is more preferable. Examples of another compound or the like containing the element M include an oxide of the element M, a sulfide of the element M, a nitride of the element M, and an alloy of an atom of the element M and a lithium atom. Examples of the sulfide of the element M include Al₂S₃. Examples of the nitride of the element M include AlN and BN. One of the compounds or the like containing the element M may be used alone, or two or more kinds thereof may be used in mixture.

Examples of the compound or the like containing the element A include a halide of the element A (LiF, LiCl, LiBr, LiI, or the like described above), the above-described compound represented by A_{α}M_{β}N (Li_{1.5}Al_{0.5}N or the like), Li₂S, Li₂O, Li₃N, Li₂CO₃, metallic lithium, Na₂S, Na₂O, Na₃N, Na₂CO₃, metallic sodium, K₂S, K₂O, K₃N, K₂CO₃, and metallic potassium. Among the above, Li₂S, Li_{1.5}Al_{0.5}N, LiBr, and LiI are preferable. One of the compounds or the like containing the element A may be used alone, or two or more kinds thereof may be used in mixture.

Examples of the compound or the like containing the sulfur element include Li₂S, P₂S₃, P₂S₅, Al₂S₃ and simple substance sulfur. Among the above, Li₂S, P₂S₃, and P₂S₅ are preferable, and Li₂S and P₂S₅ are more preferable. One of the compounds or the like containing the sulfur element may be used alone, or two or more kinds thereof may be used in mixture.

For example, as one embodiment, the composition may be a composition containing Li₂S, P₂S₅, Li_{1.5}Al_{0.5}N, LiBr, and LiI, or a composition consisting of Li₂S, P₂S₅, Li_{1.5}Al_{0.5}N, LiBr, and LiI.

### (Treatment step)

In the method for producing a sulfide solid electrolyte according to one embodiment of the present invention, the composition is subjected to treatment to obtain a sulfide solid electrolyte. Examples of the treatment include a method of obtaining an intermediate by mechanical milling or the like and heating the intermediate. The means for obtaining the intermediate is not limited thereto, and a method other than the mechanical milling, for example, a melt quenching method may be performed.

The mechanical milling may be either dry milling or wet milling, but is preferably wet milling because the raw material compounds and the like can be mixed more uniformly. Examples of the mechanical milling include milling with a container-driven mill, a media agitating mill, a high-speed rotating pulverizer, a roller mill, a jet mill, or the like. Examples of the container-driven mill include a tumbling mill, a vibration mill, and a planetary mill. Examples of the media agitating mill include an attritor and a bead mill. Examples of the high-speed rotating pulverizer include a hammer mill and a pin mill. Among the above, the container-driven mill is preferable, and the planetary mill is particularly preferable.

The intermediate obtained through the mechanical milling or the like may have a crystal structure, but is preferably so-called sulfide glass. The term "sulfide glass" means a sulfide solid electrolyte including an amorphous structure. When the intermediate is sulfide glass, it is possible to obtain a sulfide solid electrolyte in which the amount of a crystal phase having low stability such as Li₂S is small and each element is highly dispersed.

The intermediate obtained by the mechanical milling or the like is subjected to heating (heat treatment). Thus, a sulfide solid electrolyte in which at least a part of the intermediate is crystallized, preferably at least a part of the intermediate is crystallized into HICP described above is obtained. The heating (heat treatment) may be performed under a reduced-pressure atmosphere or an inert gas atmosphere. The temperature range of the heating is, for example, preferably 150°C or more and 250°C or less, more preferably 170°C or more and 240°C or less, and still more preferably 180°C or more and 230°C or less. When the heating temperature is set to be equal to or more than the lower limit, crystallization sufficiently proceeds, and a sulfide solid electrolyte having sufficiently high oxidation resistance can be obtained. In addition, when the heating temperature is set to be equal to or less than the upper limit, precipitation of a phase having low ion conductivity (LICP: Low Ion Conduction Phase) is suppressed, and a sulfide solid electrolyte having high ion conductivity is obtained. LICP is a specific crystal structure in which a diffraction angle 2θ has diffraction peaks in a range of 21.0° ± 0.5° and a range of 28.0° ± 0.5° in an X-ray diffraction diagram using a CuKα ray.

### <Positive electrode for energy storage device>

A positive electrode for an energy storage device according to one embodiment of the present invention (hereinafter, also referred to as a "positive electrode") includes the sulfide solid electrolyte according to one embodiment of the present invention. Since the positive electrode includes the sulfide solid electrolyte according to one embodiment of the present invention having high oxidation resistance, when the positive electrode is used in an energy storage device, the charge-discharge efficiency and the like of the energy storage device can be enhanced. The positive electrode includes a positive electrode substrate and a positive electrode active material layer which is arranged on the positive electrode substrate directly or via an intermediate layer. The positive electrode may have an intermediate layer between the positive electrode substrate and the positive electrode active material layer.

In the positive electrode, a solid electrolyte other than the sulfide solid electrolyte according to one embodiment of the present invention may be used in combination. Examples of another solid electrolyte include a sulfide solid electrolyte other than the sulfide solid electrolyte according to one embodiment of the present invention, an oxide solid electrolyte, a dry polymer electrolyte, a gel polymer electrolyte, and a pseudo solid electrolyte, and a sulfide solid electrolyte is preferable.

Examples of the sulfide solid electrolyte other than the sulfide solid electrolyte according to one embodiment of the present invention include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-P₂S₅-Li₃N, Li₂S-SiS₂, Li₂S-SiS₂₋LiI, Li₂S-SiS₂-LiBr, Li₂S-SiS₂₋LiCl, Li₂S-SiS₂-B₂S₃-LiI, Li₂S-SiS₂₋P₂S₅-LiI, Li₂S-B₂S₃, Li₂S-P₂S₅-ZₘS₂ₙ (m and n are positive numbers, and Z is any of Ge, Zn, and Ga), Li₂S-GeS₂, Li₂S-SiS₂-Li₃PO₄, Li₂S-SiS₂-LiₓMO_{y} (x and y are positive numbers, and M is any of P, Si, Ge, B, Al, Ga, and In), Li₆PS₅Cl, and Li₁₀GeP₂S₁₂. Among the above, an argyrodite type solid electrolyte such as Li₆PS₅Cl can be suitably used as the sulfide solid electrolyte other than the sulfide solid electrolyte according to one embodiment of the present invention.

The positive electrode substrate has conductivity. Whether or not the positive electrode substrate has "conductivity" is determined on the basis of a volume resistivity measured in conformity with JIS H 0505:1975, with 10⁻² Ω·cm being assumed as a threshold value. As the material of the positive electrode substrate, a metal such as aluminum, titanium, tantalum, or stainless steel, or an alloy thereof is used. Among the above, aluminum or an aluminum alloy is preferable from the viewpoint of potential resistance, high conductivity, and cost. Examples of the positive electrode substrate include a foil, a vapor-deposited film, a mesh, and a porous material, and a foil is preferable from the viewpoint of cost. Therefore, an aluminum foil or an aluminum alloy foil is preferable as the positive electrode substrate. Examples of the aluminum or the aluminum alloy include A1085, A3003, and A1N30 specified in JIS H 4000:2014 or JIS H 4160:2006.

The average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode substrate is set to be within the above range, the energy density per volume of the energy storage device can be increased while increasing the strength of the positive electrode substrate. The "average thickness" is an average value of thicknesses measured at any five points (hereinafter, the same applies to the average thickness).

The intermediate layer is a layer arranged between the positive electrode substrate and the positive electrode active material layer. As the intermediate layer contains a conductive agent such as carbon particles, contact resistance between the positive electrode substrate and the positive electrode active material layer is reduced. The configuration of the intermediate layer is not particularly limited, and contains, for example, a binder and a conductive agent.

The positive electrode active material layer contains a positive electrode active material and a sulfide solid electrolyte. The positive electrode active material layer can be formed from a so-called positive electrode blending agent containing a positive electrode active material and a sulfide solid electrolyte. The positive electrode active material layer may contain a mixture or a composite including a positive electrode active material, a sulfide solid electrolyte, and the like. The positive electrode active material layer contains, as necessary, optional constituents such as a conductive agent, a binder, a thickener, and a filler. One, or two or more of these optional constituents may not be substantially contained in the positive electrode active material layer.

The positive electrode active material can be appropriately selected from known positive electrode active materials. As the positive electrode active material for a lithium ion secondary battery, a material capable of occluding and releasing lithium ions is usually used. Examples of the positive electrode active material include lithium transition metal composite oxides having an α-NaFeO₂-type crystal structure, lithium transition metal composite oxides having a spinel-type crystal structure, polyanion compounds, chalcogen compounds, and sulfur. Examples of the lithium transition metal composite oxides having an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-y)}]O₂ (0 ≤ x < 0.5, 0 < γ < 1, 0 < 1-x-γ), Li[LiₓNi_{γ}Mn_{β}Co_{(1-x-γ-β)}]O₂ (0 ≤ x < 0.5, 0 < γ, 0 < β, 0.5 < γ+β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ+β < 1, 0 < 1-x-γ-β). Examples of the lithium transition metal composite oxides having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogen compounds include titanium disulfide, molybdenum disulfide, and molybdenum dioxide. Atoms or polyanions in these materials may be partially substituted with atoms or anion species of other elements. The surfaces of these materials may be coated with other materials (for example, LiNbO₃ or the like). In the positive electrode active material layer, one of these materials may be used alone, or two or more kinds thereof may be used in mixture.

The positive electrode active material is preferably a lithium transition metal composite oxide, more preferably a lithium transition metal composite oxide containing at least one of a nickel element, a cobalt element, or a manganese element, still more preferably a lithium transition metal composite oxide containing at least two of a nickel element, a cobalt element, or a manganese element, and yet still more preferably a lithium transition metal composite oxide containing a nickel element, a cobalt element, and a manganese element. The lithium transition metal composite oxide preferably has an α-NaFeO₂-type crystal structure. By using such a lithium transition metal composite oxide, for example, the energy density can be increased.

The positive electrode active material is usually in the form of particles (powder). The average particle size of the positive electrode active material is preferably, for example, 0.1 µm or more and 20 µm or less. When the average particle size of the positive electrode active material is set to be equal to or more than the lower limit, the positive electrode active material is easily produced or handled. When the average particle size of the positive electrode active material is set to be equal to or less than the upper limit, the electron conductivity of the positive electrode active material layer is improved. When a composite of the positive electrode active material and another material is used, the average particle size of the composite is regarded as the average particle size of the positive electrode active material. The term "average particle size" means a value at which a volume-based cumulative distribution calculated in accordance with JIS Z 8819-2:2001 is 50% based on a particle size distribution measured by a laser diffraction and scattering method for a diluted solution obtained by diluting particles with a solvent in accordance with JIS Z 8825:2013.

In order to obtain powder having a predetermined particle size, a pulverizer, a classifier, or the like is used. Examples of a method of pulverization include a method using a mortar, a ball mill, a sand mill, a vibration ball mill, a planetary ball mill, a jet mill, an opposed jet mill, a swirling airflow jet mill, a sieve, or the like. In performing the pulverization, wet pulverization in which water or an organic solvent such as hexane is present can also be used. As a method of classification, a sieve, an air classifier, or the like is used as necessary in both a dry method and a wet method.

The content of the positive electrode active material in the positive electrode active material layer is preferably 10% by mass or more and 95% by mass or less, more preferably 30% by mass or more and 90% by mass or less, still more preferably 50% by mass or more and 85% by mass or less, and the lower limit thereof is preferably 60% by mass, and yet still more preferably 70% by mass. When the content of the positive electrode active material is set to be within the above range, for example, the discharge capacity of the energy storage device can be increased.

The content of all the solid electrolytes in the positive electrode active material layer is preferably 5% by mass or more and 50% by mass or less, more preferably 10% by mass or more and 40% by mass or less, and still more preferably 15% by mass or more and 30% by mass or less. The content of the sulfide solid electrolyte according to one embodiment of the present invention with respect to all the solid electrolytes in the positive electrode active material layer is preferably 5% by mass or more and 100% by mass or less, more preferably 10% by mass or more and 100% by mass or less, and still more preferably 20% by mass or more and 100% by mass or less. When the content of the solid electrolyte is set to be within the above range, for example, the discharge capacity of the energy storage device can be increased.

Examples of the composite of the positive electrode active material and the solid electrolyte or the like include a composite having a chemical or physical bond between the positive electrode active material and the solid electrolyte or the like, and a composite obtained by mechanically compositing the positive electrode active material and the solid electrolyte or the like. The composite may be a composite in which the positive electrode active material and the solid electrolyte or the like are present in one particle, and examples thereof include a composite in which the positive electrode active material and the solid electrolyte or the like form an aggregated state, and a composite in which a film containing the solid electrolyte or the like is formed on at least a part of the surface of the positive electrode active material.

A composite (composite particle) in which at least a part of the surface of a particle of the positive electrode active material is coated with the sulfide solid electrolyte according to one embodiment of the present invention is also a preferred aspect of the present invention. When at least a part of the surface of a particle of the positive electrode active material is coated with the sulfide solid electrolyte according to one embodiment of the present invention, favorable ion conductivity can be exhibited. In addition, the sulfide solid electrolyte according to one embodiment of the present invention has favorable oxidation resistance, and thus is particularly useful as a solid electrolyte for coating a positive electrode active material. The content of the sulfide solid electrolyte in the composite is, for example, preferably 1% by mass or more and 20% by mass or less, and more preferably 3% by mass or more and 10% by mass or less. The content of the composite in the positive electrode active material layer is, for example, preferably 60% by mass or more and 95% by mass or less, more preferably 70% by mass or more and 90% by mass or less, and still more preferably 75% by mass or more and 85% by mass or less.

The composite (composite particle) can be produced, for example, by a method in which a particulate or powdery positive electrode active material and a solid electrolyte are mixed while applying impact, compression, and shear force. At this time, constituents other than the positive electrode active material and the solid electrolyte may be further mixed to perform compositing. The compositing treatment can be performed by, for example, treatment using an apparatus including an impeller (also referred to as a rotary blade, a bladed wheel, or the like). Specifically, the treatment is treatment using a mechanical kneading method in which an impeller in a container is rotated to apply impact, compression, and shear force to the mixture of the positive electrode active material and the solid electrolyte between the impeller and the wall surface of the container. The treatment may be performed by a dry method or a wet method. The positive electrode active material and the solid electrolyte may be mixed in advance before performing the treatment using the apparatus including the impeller. Alternatively, the positive electrode active material and the solid electrolyte may be separately put into the apparatus including the impeller.

The positive electrode active material layer may contain the composite (composite particle), another solid electrolyte, a conductive agent, and a binder. In such a configuration, both the solid electrolyte constituting the composite and the another solid electrolyte may be the sulfide solid electrolyte according to one embodiment of the present invention. Alternatively, the another solid electrolyte may be a solid electrolyte other than the sulfide solid electrolyte according to one embodiment of the present invention. As the another solid electrolyte, for example, a conventionally known sulfide solid electrolyte other than the sulfide solid electrolyte according to one embodiment of the present invention exemplified above can be suitably used.

The conductive agent is not particularly limited as long as it is a material having conductivity. Examples of such a conductive agent include carbon materials, metals, and conductive ceramics. Examples of the carbon materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen black. Examples of the graphene-based carbon include graphene, carbon nanotubes, and fullerene. Examples of the shape of the conductive agent include a powdery form and a fibrous form. As the conductive agent, one of these materials may be used alone, or two or more kinds thereof may be used in mixture. Moreover, these materials may be composited and used. For example, a composite material of carbon black and a carbon nanotube may be used.

The content of the conductive agent in the positive electrode active material layer is preferably 0.5% by mass or more and 10% by mass or less, more preferably 1% by mass or more and 6% by mass or less, and the upper limit of the content of the conductive agent is 5% by mass, 4% by mass, or 3% by mass. When the content of the conductive agent is set to be within the above range, the energy density of the energy storage device can be increased.

Examples of the binder include thermoplastic resins such as fluororesins (polytetrafluoroethylene (PTFE), polyvinylidene fluoride (PVDF), or the like), polyethylene, polypropylene, polyacrylate, and polyimide; elastomers such as ethylene-propylene-diene rubber (EPDM), sulfonated EPDM, styrene-butadiene rubber (SBR), and fluororubber; and polysaccharide polymers.

The content of the binder in the positive electrode active material layer is preferably 0.5% by mass or more and 10% by mass or less, more preferably 1% by mass or more and 6% by mass or less, and the upper limit of the content of the binder is 5% by mass, 4% by mass, or 3% by mass. When the content of the binder is set to be within the above range, the positive electrode active material can be stably held.

Examples of the thickener include polysaccharide polymers such as carboxymethyl cellulose (CMC) and methyl cellulose. When the thickener has a functional group that reacts with lithium or the like, the functional group may be deactivated in advance by methylation or the like. In one embodiment of the present invention, the content of the thickener in the positive electrode active material layer may be 1% by mass or less, may be 0.1% by mass or less, or the thickener may not be substantially contained.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica or synthetic substances thereof. In one embodiment of the present invention, the content of the filler in the positive electrode active material layer may be 1% by mass or less, may be 0.1% by mass or less, or the filler may not be substantially contained.

The positive electrode active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Nb, and W, as the constituents other than the positive electrode active material, the solid electrolyte, the conductive agent, the binder, the thickener, and the filler.

The average thickness of the positive electrode active material layer is preferably 30 µm or more and 1000 µm or less, and more preferably 60 µm or more and 500 µm or less. When the average thickness of the positive electrode active material layer is set to be equal to or more than the lower limit, an energy storage device having a high energy density can be obtained. When the average thickness of the positive electrode active material layer is set to be equal to or less than the upper limit, the size of the energy storage device can be reduced.

### <Energy storage device>

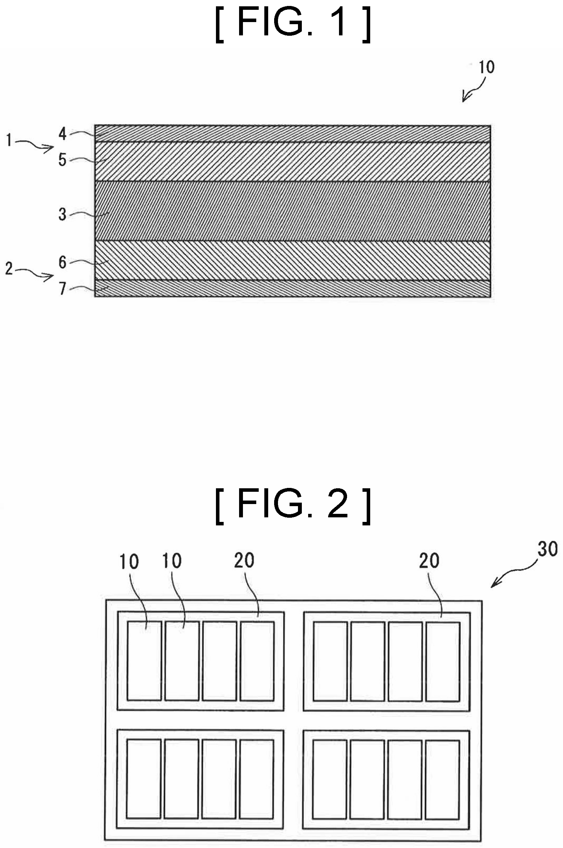

An energy storage device according to one embodiment of the present invention contains the sulfide solid electrolyte according to one embodiment of the present invention. Hereinafter, an all-solid-state battery will be described as a specific example of the energy storage device according to one embodiment of the present invention. An energy storage device 10 of FIG. 1 is an all-solid-state battery, and is a secondary battery in which a positive electrode 1 and a negative electrode 2 are arranged with an isolation layer 3 interposed therebetween. The positive electrode 1 includes a positive electrode substrate 4 and a positive electrode active material layer 5, and the positive electrode substrate 4 is the outermost layer of the positive electrode 1. The negative electrode 2 includes a negative electrode substrate 7 and a negative electrode active material layer 6, and the negative electrode substrate 7 is the outermost layer of the negative electrode 2. In the energy storage device 10 illustrated in FIG. 1, the negative electrode active material layer 6, the isolation layer 3, the positive electrode active material layer 5, and the positive electrode substrate 4 are laminated in this order on the negative electrode substrate 7.

The energy storage device 10 contains the sulfide solid electrolyte according to one embodiment of the present invention in at least one of the positive electrode 1, the negative electrode 2, or the isolation layer 3. More specifically, the sulfide solid electrolyte according to one embodiment of the present invention is contained in at least one of the positive electrode active material layer 5, the negative electrode active material layer 6, or the isolation layer 3. When the sulfide solid electrolyte according to one embodiment of the present invention is contained in the positive electrode 1, the positive electrode 1 is the positive electrode for an energy storage device according to one embodiment of the present invention. In the energy storage device 10, since a sulfide solid electrolyte having high oxidation resistance is used, it is possible to enhance the energy storage device performance such as the charge-discharge efficiency and the capacity retention rate.

In the energy storage device 10, a solid electrolyte other than the sulfide solid electrolyte according to one embodiment of the present invention may be used in combination. Examples of another solid electrolyte include a solid electrolyte exemplified in the description of the positive electrode for an energy storage device according to one embodiment of the present invention, and a sulfide solid electrolyte is preferable. In addition, a plurality of different kinds of solid electrolytes may be contained in one layer in the energy storage device 10, or different solid electrolytes may be contained in each layer.

### (Positive electrode)

The positive electrode 1 includes the positive electrode substrate 4 and the positive electrode active material layer 5 which is arranged on the positive electrode substrate 4 directly or via an intermediate layer. In one embodiment of the present invention, the positive electrode for an energy storage device according to one embodiment of the present invention is used as the positive electrode 1.

### (Negative electrode)

The negative electrode 2 includes the negative electrode substrate 7 and the negative electrode active material layer 6 which is arranged on the negative electrode substrate 7 directly or via an intermediate layer. The configuration of the intermediate layer is not particularly limited, and can be selected from, for example, the configurations exemplified for the positive electrode for an energy storage device according to one embodiment of the present invention.

The negative electrode substrate 7 has conductivity. As the material of the negative electrode substrate 7, a metal such as copper, nickel, stainless steel, nickel-plated steel, or aluminum, an alloy thereof, a carbonaceous material, or the like is used. Among the above, copper or a copper alloy is preferable. Examples of the negative electrode substrate 7 include a foil, a vapor-deposited film, a mesh, and a porous material, and a foil is preferable from the viewpoint of cost. Therefore, a copper foil or a copper alloy foil is preferable as the negative electrode substrate 7. Examples of the copper foil include a rolled copper foil and an electrolytic copper foil.

The average thickness of the negative electrode substrate 7 is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode substrate 7 is set to be within the above range, the energy density per volume of the energy storage device 10 can be increased while increasing the strength of the negative electrode substrate 7.

The negative electrode active material layer 6 contains a negative electrode active material. The negative electrode active material layer 6 can be formed from a so-called negative electrode blending agent containing a negative electrode active material. The negative electrode active material layer 6 may contain a solid electrolyte, or may contain a mixture or a composite of a negative electrode active material, a solid electrolyte, and the like. The negative electrode active material layer 6 contains, as necessary, optional constituents such as a conductive agent, a binder, a thickener, and a filler. The kinds and preferred contents of the optional constituents in the negative electrode active material layer 6 are the same as those of the optional constituents of the positive electrode active material layer 5 described above. One, or two or more of these optional constituents may not be substantially contained in the negative electrode active material layer 6.

The negative electrode active material layer 6 may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Ta, Hf, Nb, and W, as the constituents other than the negative electrode active material, the solid electrolyte, the conductive agent, the binder, the thickener, and the filler.

The negative electrode active material can be appropriately selected from known negative electrode active materials. As the negative electrode active material for a lithium ion secondary battery, a material capable of occluding and releasing lithium ions is usually used. Examples of the negative electrode active material include metallic lithium; metals or semimetals such as Si and Sn; metal oxides or semimetal oxides such as Si oxides, Ti oxides, and Sn oxides; titanium-containing oxides such as Li₄Ti₅O₁₂, LiTiO₂, and TiNb₂O₇; polyphosphate compounds; silicon carbide; and carbon materials such as graphite and non-graphitic carbon (graphitizable carbon or non-graphitizable carbon). Among these materials, graphite and non-graphitic carbon are preferable. In the negative electrode active material layer 6, one of these materials may be used alone, or two or more kinds thereof may be used in mixture.

The term "graphite" refers to a carbon material in which the average interplanar spacing (d₀₀₂) of a plane (002) determined by an X-ray diffraction method before charge and discharge or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average interplanar spacing (d₀₀₂) of a plane (002) determined by an X-ray diffraction method before charge and discharge or in a discharged state is 0.34 nm or more and 0.42 nm or less. Examples of the non-graphitic carbon include non-graphitizable carbon and graphitizable carbon. Examples of the non-graphitic carbon include resin-derived materials, petroleum pitch or petroleum pitch-derived materials, petroleum coke or petroleum coke-derived materials, plant-derived materials, and alcohol-derived materials.

Here, the term "discharged state" means a state in which discharge is performed such that lithium ions, which can be occluded and released during charge and discharge, are sufficiently released from the carbon material serving as a negative electrode active material. For example, in a half-cell in which a negative electrode containing a carbon material as a negative electrode active material is used as a working electrode and metallic lithium is used as a counter electrode, the "discharged state" refers to a state in which an open circuit voltage is 0.7 V or more.

The term "non-graphitizable carbon" refers to a carbon material in which the d₀₀₂ is 0.36 nm or more and 0.42 nm or less.

The term "graphitizable carbon" refers to a carbon material in which the d₀₀₂ is 0.34 nm or more and less than 0.36 nm.

The negative electrode active material is usually in the form of particles (powder). The average particle size of the negative electrode active material can be, for example, 1 nm or more and 100 µm or less. When the negative electrode active material is a carbon material, a titanium-containing oxide, or a polyphosphate compound, the average particle size thereof may be 1 µm or more and 100 µm or less. When the negative electrode active material is Si, Sn, an Si oxide, an Sn oxide, or the like, the average particle size thereof may be 1 nm or more and 1 µm or less. When the average particle size of the negative electrode active material is set to be equal to or more than the lower limit, the negative electrode active material is easily produced or handled. When the average particle size of the negative electrode active material is set to be equal to or less than the upper limit, the electron conductivity of the negative electrode active material layer 6 is improved. In order to obtain powder having a predetermined particle size, a pulverizer, a classifier, or the like is used. A method of pulverization and a method of classification can be selected from, for example, the methods exemplified for the positive electrode for an energy storage device according to one embodiment of the present invention. When the negative electrode active material is a metal such as metallic lithium, the negative electrode active material layer 6 may be in a foil form.

The content of the negative electrode active material in the negative electrode active material layer 6 is preferably 10% by mass or more and 100% by mass or less, more preferably 30% by mass or more and 95% by mass or less, and the lower limit thereof is preferably 50% by mass, and yet still more preferably 70% by mass. When the negative electrode active material is a metal such as metallic lithium, the lower limit of the content of the negative electrode active material in the negative electrode active material layer 6 may be 95% by mass, and may be 99% by mass. When the content of the negative electrode active material is set to be within the above range, for example, the discharge capacity of the energy storage device 10 can be increased.

When the negative electrode active material layer 6 contains a solid electrolyte, the content of the solid electrolyte is preferably 5% by mass or more and 90% by mass or less, more preferably 20% by mass or more and 70% by mass or less, and the upper limit thereof may be still more preferably 50% by mass. When the content of the solid electrolyte is set to be within the above range, for example, the discharge capacity of the energy storage device 10 can be increased. When the sulfide solid electrolyte according to one embodiment of the present invention is used in the negative electrode active material layer 6, the content of the sulfide solid electrolyte according to one embodiment of the present invention with respect to all the solid electrolytes in the negative electrode active material layer 6 is preferably 50% by mass or more, more preferably 70% by mass or more, still more preferably 90% by mass or more, and yet still more preferably substantially 100% by mass.

The mixture or the composite of the negative electrode active material, the solid electrolyte, and the like may be obtained by replacing the positive electrode active material with the negative electrode active material in the mixture or the composite of the positive electrode active material, the solid electrolyte, and the like described above.

The average thickness of the negative electrode active material layer 6 is preferably 30 µm or more and 1000 µm or less, and more preferably 60 µm or more and 500 µm or less. When the average thickness of the negative electrode active material layer 6 is set to be equal to or more than the lower limit, the energy storage device 10 having a high energy density can be obtained. When the average thickness of the negative electrode active material layer 6 is set to be equal to or less than the upper limit, the size of the energy storage device 10 can be reduced.

### (Isolation layer)

The isolation layer 3 contains a solid electrolyte. Examples of the solid electrolyte include a solid electrolyte exemplified in the description of the sulfide solid electrolyte according to one embodiment of the present invention and the positive electrode for an energy storage device according to one embodiment of the present invention. The content of the solid electrolyte in the isolation layer 3 is preferably 70% by mass or more, more preferably 90 by mass or more%, still more preferably 99% by mass or more, and may be yet still more preferably substantially 100% by mass. When the sulfide solid electrolyte according to one embodiment of the present invention is used in the isolation layer 3, the content of the sulfide solid electrolyte according to one embodiment of the present invention with respect to all the solid electrolytes in the isolation layer 3 is preferably 50% by mass or more, more preferably 70% by mass or more, still more preferably 90 by mass or more%, and yet still more preferably substantially 100% by mass.

The isolation layer 3 may contain optional constituents such as phosphate compounds such as Li₃PO₄, oxides, halogen compounds, a binder, a thickener, and a filler. The optional constituents such as the binder, the thickener, and the filler can be selected from the materials exemplified for the positive electrode for an energy storage device according to one embodiment of the present invention.

The average thickness of the isolation layer 3 is preferably 1 µm or more and 50 µm or less, and more preferably 3 µm or more and 20 µm or less. When the average thickness of the isolation layer 3 is set to be equal to or more than the lower limit, the positive electrode 1 and the negative electrode 2 can be insulated from each other with high reliability. When the average thickness of the isolation layer 3 is set to be equal to or less than the upper limit, the energy density of the energy storage device 10 can be increased.

### <Energy storage apparatus>

The energy storage device of the present embodiment can be mounted as an energy storage unit (battery module) configured by assembling a plurality of energy storage devices on a power source for automobiles such as electric vehicles (EV), hybrid vehicles (HEV), and plug-in hybrid vehicles (PHEV), a power source for electronic devices such as personal computers and communication terminals, a power source for power storage, or the like. In this case, the technique of the present invention may be applied to at least one energy storage device included in the energy storage unit.

FIG. 2 illustrates an example of an energy storage apparatus 30 in which energy storage units 20 in each of which two or more electrically connected energy storage devices 10 are assembled are further assembled. The energy storage apparatus 30 may include a bus bar (not illustrated) that electrically connects two or more energy storage devices 10, a bus bar (not illustrated) that electrically connects two or more energy storage units 20, and the like. The energy storage unit 20 or the energy storage apparatus 30 may include a state monitoring device (not illustrated) that monitors a state of one or more energy storage devices 10.

### <Method for producing energy storage device>

A method for producing an energy storage device according to one embodiment of the present invention can be performed by a commonly known method, except that the sulfide solid electrolyte according to one embodiment of the present invention is used as a part or all of the solid electrolyte. Specifically, the production method includes, for example, (1) preparing a positive electrode blending agent, (2) preparing a material for an isolation layer, (3) preparing a negative electrode blending agent, and (4) laminating a positive electrode, the isolation layer, and a negative electrode. Hereinafter, each step will be described in detail.

### (1) Step of preparing positive electrode blending agent

In this step, a positive electrode blending agent for forming a positive electrode (positive electrode active material layer) is usually prepared. A method for preparing the positive electrode blending agent is not particularly limited and can be appropriately selected in accordance with the purpose. For example, the positive electrode blending agent can be prepared by mixing the positive electrode active material, the solid electrolyte, and the like using a mechanical milling method or the like. In addition, a mixture or a composite of the positive electrode active material and the solid electrolyte may be produced in advance by the above-described method or the like, and the mixture or the composite obtained may be mixed with other constituents.

### (2) Step of preparing material for isolation layer

In this step, a material for an isolation layer for forming the isolation layer is usually prepared. When the energy storage device is an all-solid-state battery, the material for an isolation layer can be a solid electrolyte. The solid electrolyte as the material for an isolation layer can be prepared by a conventionally known method. For example, the solid electrolyte can be obtained by treating predetermined materials with a mechanical milling method. The material for an isolation layer may be prepared by heating predetermined materials to a melting temperature or more by a melt quenching method to melt and mix the materials at a predetermined ratio, and quenching the mixture. Examples of other methods for synthesizing the material for an isolation layer include a solid phase method of sealing under reduced pressure and then firing, a liquid phase method such as dissolution-precipitation, a gas phase method, and firing under an argon atmosphere after mechanical milling.

### (3) Step of preparing negative electrode blending agent

In this step, a negative electrode blending agent for forming a negative electrode (negative electrode active material layer) is usually prepared. A specific method for preparing the negative electrode blending agent is the same as that of the positive electrode blending agent. The negative electrode active material layer may be formed of a lithium foil or the like instead of the negative electrode blending agent.

### (4) Laminating step

In this step, for example, a positive electrode including a positive electrode substrate and a positive electrode active material layer, an isolation layer, and a negative electrode including a negative electrode substrate and a negative electrode active material layer are laminated. In this step, the positive electrode, the isolation layer, and the negative electrode may be sequentially formed in this order, or vice versa, and the order of forming the respective layers is not particularly limited. The positive electrode is formed, for example, by pressure-molding the positive electrode substrate and the positive electrode blending agent, the isolation layer is formed by pressure-molding the material for an isolation layer, and the negative electrode is formed by pressure-molding the negative electrode substrate and the negative electrode blending agent. The positive electrode, the isolation layer, and the negative electrode may be laminated by pressure-molding the positive electrode substrate, the positive electrode blending agent, the material for an isolation layer, the negative electrode blending agent, and the negative electrode substrate at a time. Each of the positive electrode and the negative electrode may be formed in advance and laminated by pressure-molding together with the isolation layer. Each layer may be formed by coating or the like.

### <Other embodiments>

The sulfide solid electrolyte, the method for producing a sulfide solid electrolyte, the positive electrode for an energy storage device, and the energy storage device of the present invention are not limited to the above-described embodiments, and various modifications may be made without departing from the scope of the present invention. For example, to the configuration of an embodiment, the configuration of another embodiment can be added, and a part of the configuration of an embodiment can be replaced with the configuration of another embodiment or a well-known technique. Furthermore, a part of the configuration of an embodiment can be deleted. In addition, a well-known technique can be added to the configuration of an embodiment.

For example, the energy storage device according to the present invention may include a layer other than the positive electrode, the isolation layer, and the negative electrode. The present invention can also be applied to an energy storage device including a bipolar electrode. In addition, the energy storage device according to the present invention may include a liquid. Examples of such an energy storage device include an energy storage device in which voids of the positive electrode active material layer 5, the isolation layer 3, the negative electrode active material layer 6, and the like in the above-described energy storage device 10 are filled with a non-aqueous electrolytic solution or the like containing an ionic liquid or the like. The energy storage device according to the present invention may be a capacitor or the like, in addition to an energy storage device which is a secondary battery.

### <Examples>

Hereinafter, the present invention will be described more specifically with reference to examples, but the present invention is not limited to the following examples.

### [Example 1]

A sulfide solid electrolyte represented by Li_{3.67}PAl_{0.03}S_{3.95}N_{0.06}Br_{0.40}I_{0.27} was synthesized by the following treatment. Li₃N and AlN were weighed to have a molar ratio of 1.2:1, mixed in a mortar, and then pelletized. Next, heat treatment was performed at 750°C for 1 hour to prepare Li_{1.5}Al_{0.5}N. The main phase of the prepared Li_{1.5}Al_{0.5}N was confirmed to be Li_{1.5}Al_{0.5}N by X-ray diffraction measurement. In a glove box with an argon atmosphere having a dew point of -50°C or less, Li₂S (99.98%, manufactured by Aldrich), P₂S₅ (99%, manufactured by Aldrich), Li_{1.5}Al_{0.5}N, LiBr (99.999%, manufactured by Aldrich), and LiI (99.999%, manufactured by Aldrich) were weighed to have a molar ratio of 54.1:18.6:2.3:15.0:10.0, and then mixed in a mortar to prepare a composition containing a lithium element as the element A, a phosphorus element, a bromine element and an iodine element as the halogen element, a nitrogen element, and an aluminum element as the element M, and a sulfur element. The composition was put into a closed 80 mL zirconia pot containing 160 g of zirconia balls having a diameter of 4 mm. Mechanical milling treatment was performed for 45 hours at the number of revolutions of 510 rpm by a planetary ball mill (manufactured by FRITSCH, model number: Premium line PL-7) to obtain an intermediate. The intermediate was heated (heat-treated) at 220°C for 2 hours to obtain a sulfide solid electrolyte of Example 1. The heating temperature was set to be in the vicinity of a crystallization temperature and within a range of ±50°C of the crystallization temperature. The crystallization temperature was determined by taking out a part of the intermediate after the mechanical milling treatment and subjecting the part to DSC measurement. The DSC measurement was performed under the following conditions. That is, the temperature was raised from room temperature to 400°C at a rate of 10°C/min using a DSC apparatus (manufactured by Rigaku Holdings Corporation, Thermo Plus DSC8230) and a SUS sealed pan.

### [Examples 2, 4, and 5, and Comparative Examples 1 and 3 to 8]

Sulfide solid electrolytes of Examples 2, 4, and 5, and Comparative Examples 1, and 3 to 8 were obtained in the same manner as in Example 1 except that the amounts of raw material compounds used and the like were adjusted such that the element ratios and the composition formulae of the sulfide solid electrolytes were as shown in Table 1, and the heating temperatures (HT) were as shown in Table 1. Each of the heating temperatures is a temperature within a range of ±50°C of the crystallization temperature obtained in the same manner as in Example 1.

### [Example 3]

A sulfide solid electrolyte represented by Li_{3.67}PB_{0.02}S_{3.97}N_{0.04}Br_{0.40}I_{0.27} was synthesized by the following treatment. Li₃N and BN were weighed to have a molar ratio of 1.1:1, mixed in a mortar, and then pelletized. Next, heat treatment was performed at 800°C for 10 minutes to prepare Li_{1.5}B_{0.5}N. The main phase of the prepared Li_{1.5}B_{0.5}N was confirmed to be Li_{1.5}B_{0.5}N by X-ray diffraction measurement. In a glove box with an argon atmosphere having a dew point of -50°C or less, Li₂S (99.98%, manufactured by Aldrich), P₂S₅ (99%, manufactured by Aldrich), Li_{1.5}B_{0.5}N, LiBr (99.999%, manufactured by Aldrich), and LiI (99.999%, manufactured by Aldrich) were weighed to have a molar ratio of 54.8:18.7:1.5:15.0:10.0, and then mixed in a mortar to prepare a composition containing a lithium element as the element A, a phosphorus element, a bromine element and an iodine element as the halogen element, a nitrogen element, and a boron element as the element M, and a sulfur element. The composition was put into a closed 80 mL zirconia pot containing 160 g of zirconia balls having a diameter of 4 mm. Mechanical milling treatment was performed for 45 hours at the number of revolutions of 510 rpm by a planetary ball mill (manufactured by FRITSCH, model number: Premium line PL-7) to obtain an intermediate. The intermediate was heated (heat-treated) at 180°C for 2 hours to obtain a sulfide solid electrolyte of Example 3. The heating temperature is a temperature within a range of ±50°C of the crystallization temperature obtained in the same manner as in Example 1.

### [Comparative Example 2]

A sulfide solid electrolyte represented by Li_{3.67}PSi_{0.01}S_{3.97}N_{0.04}Br_{0.40}I_{0.27} was synthesized by the following treatment. Li₃N and Si₃N₄ were weighed to have a molar ratio of 5.1:1, mixed in a mortar, and then pelletized. Next, heat treatment was performed at 800°C for 10 minutes to prepare Li_{1.67}Si_{0.33}N. The main phase of the prepared Li_{1.67}Si_{0.33}N was confirmed to be Li_{1.67}Si_{0.33}N by X-ray diffraction measurement. In a glove box with an argon atmosphere having a dew point of -50°C or less, Li₂S (99.98%, manufactured by Aldrich), P₂S₅ (99%, manufactured by Aldrich), Li_{1.67}Si_{0.33}N, LiBr (99.999%, manufactured by Aldrich), and LiI (99.999%, manufactured by Aldrich) were weighed to have a molar ratio of 54.8:18.7:1.5:15.0:10.0, and then mixed in a mortar to prepare a composition containing a lithium element as the element A, a phosphorus element, a bromine element and an iodine element as the halogen element, a nitrogen element, and a silicon element, and a sulfur element. The composition was put into a closed 80 mL zirconia pot containing 160 g of zirconia balls having a diameter of 4 mm. Mechanical milling treatment was performed for 45 hours at the number of revolutions of 510 rpm by a planetary ball mill (manufactured by FRITSCH, model number: Premium line PL-7) to obtain an intermediate. The intermediate was heated (heat-treated) at 180°C for 2 hours to obtain a sulfide solid electrolyte of Comparative Example 2. The heating temperature is a temperature within a range of ±50°C of the crystallization temperature obtained in the same manner as in Example 1.

### [Confirmation of crystal structure]

Powder X-ray diffraction measurement was performed for the sulfide solid electrolytes of Examples 1 to 5 and Comparative Examples 1 to 8 by the above-described method. As an airtight sample holder for X-ray diffraction measurement, trade name "general-purpose atmosphere separator" manufactured by Rigaku Corporation was used. In an X-ray diffraction diagram of the sulfide solid electrolytes of Examples and Comparative Examples, it can be confirmed that each of the sulfide solid electrolytes has diffraction peaks in a range of 2θ = 19.9° ± 0.5° and a range of 2θ = 29.3° ± 0.5° derived from HICP and has a crystal structure.

### [Measurement of ion conductivity]

The ion conductivity at 25°C (σ₂₅) of each of the sulfide solid electrolytes of Examples 1, 2, 4, and 5 and Comparative Examples 1 and 3 to 8 was obtained by measuring the alternating-current impedance by the above-described method using "VMP-300" manufactured by Bio-Logic Science Instruments. The measurement results are shown in Table 1.

### [Measurement of amount of generation of hydrogen sulfide]

For each of the sulfide solid electrolytes of Example 1 and Comparative Examples 4 and 5, the amount of generation of hydrogen sulfide (H₂S) was measured by the following procedure. A desiccator was placed in a dry box with a dry air atmosphere having a dew point of -35°C. Thereafter, solid electrolyte powder (500 mg) was arranged in the closed dessicator (substantive volume of 2300 cm³) for 1 hour, and the amount of generation of hydrogen sulfide was measured using a hydrogen sulfide sensor (PGM-1860). The measurement results are shown in Table 1.

### [Evaluation of oxidation resistance]

The following measurement cell was prepared using each of the sulfide solid electrolytes of Examples 1 to 5 and Comparative Examples 1 to 8, and the oxidation resistance was evaluated by performing square-wave voltammetry (SWV) measurement. Under an argon atmosphere having a dew point of -50°C or less, 80 mg of sample powder (solid electrolyte to be measured) was put into a powder molder having an inner diameter of 10 mm, and then subjected to uniaxial pressing using a hydraulic press at 50 MPa or less. After pressure release, graphite powder was put on an upper surface of the sample, and then subjected to uniaxial pressing using the hydraulic press again at 360 MPa for 5 minutes. Next, a metal foil obtained by bonding a metallic lithium foil to a metallic indium foil was arranged on a lower surface of the sample, and then subjected to uniaxial pressing at 50 MPa or less to obtain a pellet-type measurement cell. The SWV measurement was performed under the following measurement conditions in a state where the measurement cell was compressed by a compression jig with a torque of 50 cNm in the laminating direction.

### (SWV measurement conditions)

Voltage amplitude: 20 mV
Relaxation time: 50 ms
Step voltage: 1 mV
Voltage range: from OCV to 4.5 V
Measurement temperature: 50°C
The measured peak current I_{MAX} is shown in Table 1. When the peak current I_{MAX} is small, it can be determined that the oxidation resistance is enhanced.

### [Preparation of energy storage device]

Using each of the sulfide solid electrolytes of Example 1 and Comparative Examples 4 and 5, an energy storage device was prepared by the following procedure. As a positive electrode active material, a material in which the surface of a particle of LiNi_{0.5}Co_{0.2}Mn_{0.3}O₂ is coated with LiNbO₃ was used. The positive electrode active material, each of the sulfide solid electrolytes, and fibrous carbon as a conductive agent were weighed at a predetermined mass ratio. Then, a binder (SBR) and butyl butyrate as a solvent were added to the mixture such that the solid content ratio is 60% by mass, and the mixture was kneaded by a hybrid mixer to obtain a positive electrode blending agent. The obtained positive electrode blending agent was applied to an aluminum foil (average thickness of 20 µm) as a positive electrode substrate using a YBA-type baker applicator such that the positive electrode blending agent has a basis weight of 15 mg·cm⁻² or more and 25 mg·cm⁻² or less. This was dried for 20 minutes under normal pressure and subsequently for 15 minutes under reduced pressure in a dryer with an argon atmosphere set to a temperature at 100°C, where the solvent volatilizes, thereby forming a positive electrode active material layer on the positive electrode substrate. This was punched into a circular shape having a diameter of 10 mm to obtain a positive electrode for evaluation. An all-solid-state battery was prepared for each positive electrode described above. Into a powder molder having an inner diameter of 10 mm, 80 mg of argyrodite type sulfide solid electrolyte represented by Li₆PS₅Cl as a material for an isolation layer was put, and pressure-molded by a uniaxial press at room temperature for several seconds at 100 MPa to form an isolation layer. After pressure release, the prepared positive electrode was put on one surface of the isolation layer, and pressure-molded by a uniaxial press at 160°C for 5 minutes at 400 MPa. After pressure release, an indium foil and a lithium foil as a negative electrode and a SUS316L foil as a negative electrode substrate were put on a surface opposite to the bonding surface of the positive electrode, and bonded by a uniaxial press at room temperature for several seconds at 50 MPa. An energy storage device (all-solid-state battery) was obtained by taking this out of the powder molder made of ceramics.

### [Charge and discharge test]

Each of the obtained energy storage devices was subjected to a charge and discharge test at 50°C in the following manner. Constant current, constant voltage charge was performed at a current of 0.1 C and a charge cutoff voltage of 3.75 V. The charge was terminated until the current reached 0.025 C. After that, a rest period of 10 minutes was provided. Thereafter, constant current discharge was performed at a current of 0.1 C to a discharge cutoff voltage of 2.25 V. The ratio of the discharge capacity to the initial charge capacity was determined as an initial charge-discharge efficiency. Next, each of the energy storage devices was subjected to a charge and discharge cycle test at 50°C in the following manner. Constant current, constant voltage charge was performed at a current of 0.2 C and a charge cutoff voltage of 3.75 V. The charge was terminated until the current reached 0.05 C. After that, a rest period of 10 minutes was provided. Thereafter, constant current discharge was performed at a current of 0.2 C to a discharge cutoff voltage of 2.25 V. After that, a rest period of 10 minutes was provided. This charge and discharge was performed for 30 cycles. The ratio of the discharge capacity at the 30th cycle to the discharge capacity at the first cycle was determined as a capacity retention rate. The results of the initial charge-discharge efficiency and the capacity retention rate are shown in Table 1.

**[Table 1]**

| | Element ratio | | | | | | Composition formula | HT /°C | σ₂₅/mS·cm⁻¹ | Amount of H₂S generated /ppm | I_{MAX} /µA | Initial charge-discharge efficiency /% | Capacity retention rate /% |
|---|---|---|---|---|---|---|---|---|---|---|---|---|---|
| | A/P | S/P | M/P | N/P | Br/P | I/P | | | | | | | |
| Example 1 | 3.67 | 3.95 | 0.03 | 0.06 | 0.40 | 0.27 | Li_{3.67}PAl_{0.03}S_{3.95}N_{0.06}Br_{0.40}I_{0.27} | 220 | 6.5 | 1.4 | 8.8 | 86.4 | 98.7 |
| Example 2 | 3.67 | 3.97 | 0.02 | 0.04 | 0.40 | 0.27 | Li_{3.67}PAl_{0.02}S_{3.97}N_{0.04}Br_{0.40}I_{0.27} | 180 | 3.7 | - | 9.0 | - | - |
| Example 3 | 3.67 | 3.97 | 0.02 | 0.04 | 0.40 | 0.27 | Li_{3.67}PB_{0.02}S_{3.97}N_{0.04}Br_{0.40}O_{0.27} | 180 | - | - | 11.1 | - | - |
| Comparative Example 1 | 3.67 | 4.04 | 0.03 | - | 0.40 | 0.27 | Li_{3.67}PAl_{0.03}S_{4.04}Br_{0.40}I_{0.27} | 180 | 4.0 | - | 11.4 | - | - |
| Comparative Example 2 | 3.67 | 3.97 | - | 0.04 | 0.40 | 0.27 | Li_{3.67}PSi_{0.04}S_{3.97}N_{0.04}Br_{0.40}I_{0.27} | 180 | - | - | 12.9 | - | - |
| Example 4 | 3.65 | 3.98 | 0.01 | 0.02 | 0.40 | 0.27 | Li_{3.65}PAl_{0.01}S_{3.98}N_{0.02}Br_{0.40}O_{0.27} | 180 | 4.4 | - | 10.7 | - | - |
| Example 5 | 3.65 | 3.83 | 0.10 | 0.20 | 0.41 | 0.27 | Li₃.₆₅PAl_{0.10}S₃.₈₃N₀.₂₀Br_{0.41}I_{0.27} | 190 | 3.8 | - | 10.2 | - | - |
| Comparative Example 3 | 3.86 | 3.82 | 0.16 | 0.33 | 0.44 | 0.29 | Li_{3.86}PAl_{0.16}S_{3.82}N_{0.33}Br_{0.44}I_{0.29} | 190 | 4.0 | - | 12.8 | - | - |
| Comparative Example 4 | 3.48 | 3.67 | 0.21 | 0.42 | 0.31 | 0.21 | Li_{3.48}PAl_{0.21}S_{3.67}N_{0.42}Br_{0.31}I_{0.21} | 255 | 4.7 | 3.6 | 11.8 | 85.7 | 98.2 |
| Comparative Example 5 | 3.67 | 4.00 | - | - | 0.40 | 0.27 | Li_{3.67}PS_{4.00}Br_{0.40}I_{0.27} | 210 | 5.6 | 6.8 | 11.8 | 85.5 | 96.8 |
| Comparative Example 6 | 3.67 | 3.94 | - | 0.04 | 0.40 | 0.27 | Li_{3.67}PS_{3.94}N_{0.04}Br_{0.40}I_{0.27} | 180 | 4.3 | - | 12.5 | - | - |
| Comparative Example 7 | 3.74 | 4.00 | 0.02 | 0.04 | 0.41 | 0.27 | Li_{3.74}PAl_{0.02}S_{4.00}N_{0.04}Br_{0.41}I_{0.27} | 180 | 4.8 | - | 13.6 | - | - |
| Comparative Example 8 | 3.74 | 3.97 | 0.02 | 0.04 | 0.41 | 0.33 | Li_{3.74}PAl_{0.02}S_{3.97}N_{0.04}Br_{0.41}I_{0.33} | 180 | 4.1 | - | 13.6 | - | - |

As shown in Table 1, in the sulfide solid electrolytes of Comparative Examples 1, 2, 5, and 6 in which the nitrogen element or the element M is not contained, the sulfide solid electrolytes of Comparative Examples 3 and 4 in which the molar ratio of the content of the nitrogen element to the content of the phosphorus element (N/P) is 0.33 or more, and the sulfide solid electrolytes of Comparative Examples 7 and 8 in which the molar ratio of the content of the lithium element (element A) to the content of the phosphorus element (A/P) is 3.74 or more, the peak current I_{MAX} was 11.2 or more, and the oxidation resistance was low. In contrast, in the sulfide solid electrolytes of Examples 1 to 5 in which the nitrogen element and the element M are contained, the molar ratio of the content of the nitrogen element to the content of the phosphorus element (N/P) is less than 0.33, and the molar ratio of the content of the lithium element (element A) to the content of the phosphorus element (A/P) is less than 3.74, the peak current I_{MAX} as an index of the oxidation resistance was less than 11.2, and the oxidation resistance was high. In addition, the energy storage device using the sulfide solid electrolyte of Example 1 having high oxidation resistance had higher initial charge-discharge efficiency and capacity retention rate than the energy storage devices using the sulfide solid electrolytes of Comparative Examples 4 and 5 having low oxidation resistance.

### INDUSTRIAL APPLICABILITY

The sulfide solid electrolyte according to the present invention is suitably used as a solid electrolyte for an energy storage device such as an all-solid-state battery.

### DESCRIPTION OF REFERENCE NUMERALS

1 Positive electrode
2 Negative electrode
3 Isolation layer
4 Positive electrode substrate
5 Positive electrode active material layer
6 Negative electrode active material layer
7 Negative electrode substrate
10 Energy storage device (All-solid-state battery)
20 Energy storage unit
30 Energy storage apparatus

## Claims

1. A sulfide solid electrolyte having a crystal structure, comprising:
at least one element A selected from the group consisting of a lithium element, a sodium element, and a potassium element;
a phosphorus element;
at least one element M selected from the group consisting of an aluminum element and a boron element;
a nitrogen element; and
at least one halogen element, wherein
a molar ratio of a content of the element A to a content of the phosphorus element (A/P) is less than 3.74, and
a molar ratio of a content of the nitrogen element to a content of the phosphorus element (N/P) is less than 0.33.

2. The sulfide solid electrolyte according to claim 1, wherein the element M includes an aluminum element.

3. The sulfide solid electrolyte according to claim 1 or 2, wherein the halogen element includes a bromine element or an iodine element.

4. The sulfide solid electrolyte according to claim 1 or 2, represented by the following formula (1), AₐPM_{b}S_{c}N_{d}XₑY_{f} (1)
wherein A is at least one selected from the group consisting of Li, Na, and K, M is at least one selected from the group consisting of Al and B, X is at least one selected from the group consisting of F, Cl, Br, and I, Y is at least one element other than A, P, S, M, N, and X, and a, b, c, d, e, and f satisfy 2 ≤ a < 3.74, 0.01 ≤ b ≤ 1, 2 ≤ c ≤ 6, 0.01 ≤ d < 0.33, 0.01 ≤ e ≤ 1, and 0 ≤ f ≤ 1, respectively.

5. A method for producing a sulfide solid electrolyte, comprising: treating a composition containing at least one element A selected from the group consisting of a lithium element, a sodium element, and a potassium element; a phosphorus element; at least one element M selected from the group consisting of an aluminum element and a boron element; a nitrogen element; and at least one halogen element, wherein a molar ratio of a content of the element A to a content of the phosphorus element (A/P) is less than 3.74, and a molar ratio of a content of the nitrogen element to a content of the phosphorus element (N/P) is less than 0.33.

6. The method for producing a sulfide solid electrolyte according to claim 5, wherein the composition contains a compound represented by A_{α}M_{β}N (A is the element A, M is the element M, and α and β are numerical values giving a stoichiometric ratio depending on a kind of the element M).

7. A sulfide solid electrolyte produced by the method for producing a sulfide solid electrolyte according to claim 5 or 6.

8. A positive electrode for an energy storage device, comprising the sulfide solid electrolyte according to claim 1 or 2.

9. An energy storage device comprising the sulfide solid electrolyte according to claim 1 or 2.
